# EUROPEAN PATENT SPECIFICATION

(11) **EP 2 543 093 B1**
(45) Date of publication and mention of the grant of the patent: **12.02.2020**
(21) Application number: 11711003.1
(22) Date of filing: 02.03.2011
(51) Int. Cl.: H01M 2/10, H01M 2/30, H01M 10/42

(54) **RECHARGEABLE BATTERY FOR AN ELECTRIC VEHICLE, VEHICLE COMPRISING SUCH A BATTERY, METHOD AND SYSTEM FOR REPLACING A RECHARGEABLE BATTERY OF AN ELECTRIC VEHICLE; AND SYSTEM FOR TRANSFERRING ENERGY TO THE BATTERY**
AKKUMULATOR FÜR EIN ELEKTROFAHRZEUG, FAHRZEUG MIT EINER DERARTIGEN BATTERIE, VERFAHREN UND SYSTEM FÜR DEN AUSTAUSCH EINES AKKUMUKATORS EINES ELEKTROFAHRZEUGES UND SYSTEM ZUR ENERGIEÜBERTRAGUNG AUF DEN AKKUMULATOR
BATTERIE RECHARGEABLE POUR UN VÉHICULE ÉLECTRIQUE, VÉHICULE COMPRENANT UNE TELLE BATTERIE, PROCÉDÉ ET SYSTÈME POUR LE REMPLACEMENT D'UNE BATTERIE RECHARGEABLE D'UN VÉHICULE ÉLECTRIQUE ; ET SYSTÈME POUR LE TRANSFERT D'ÉNERGIE À LA BATTERIE

(30) Priority: 04.03.2010 BE 201000140
(43) Date of publication of application: 09.01.2013
(73) Proprietor: De Kegel, Jacques Philemon Antoine, 9400 Ninove (BE)
(72) Inventor: De Kegel, Jacques Philemon Antoine, 9400 Ninove (BE)
(74) Representative: D'Halleweyn, Nele Veerle Trees Gertrudis
(86) International application number: PCT/BE2011/000009
(87) International publication number: WO 2011/106851

(56) References cited:
- DE-B1- 2 114 962
- FR-A1- 2 428 537
- US-A- 5 760 569
- US-A1- 2003 047 364
- US-A1- 2005 191 543
- US-A1- 2009 252 994

## Description

The present invention relates to a rechargeable battery for use in an electrically powered vehicle, and to a vehicle comprising such an electric battery. The invention also relates to a system for transferring energy to/from the battery. The invention further relates to a method and system for replacing a rechargeable battery of an electric vehicle.

US 6,564,893 describes a box mounted on a vehicle or stationary frame for holding an automotive type battery. The battery is kept in contact with internal terminals which are located in the box. The box is internally tapered to match an external taper on the battery, and has guide rails to facilitate insertion of the battery. A means to assist in the removal of the battery is provided, as is a spring loaded battery carrying strap.

US 5,760,569 describes a battery which can be slid into a compartment of a vehicle and which is electrically connected to the engine of the vehicle.

FR 2 428 537 discloses a device for autonomous feeding of electric vehicles, comprising a battery with a conductive sliding support.

A number of factors will play an important part in making an electric car successful, such as for instance the cost price of the car and simple and quick recharging of the battery. According to the known solution, so-called charging posts are provided for charging the battery. The drawback hereof is that charging times are very long. These charging posts also encourage vandalism and have an impact on the street scene. Furthermore, the method of energy transfer between charging post and car is by no means standardized. It is particularly these problems which the invention wishes to solve.

The invention provides for this purpose an assembly according to claim 1. A rechargeable battery for an electric vehicle, comprises:
- a housing;
- at least one guide means connected to the housing or integrated into the housing and intended for co-action with at least one complementary guide in the vehicle, this such that the battery can be slid into the vehicle.

Arranging the battery slidably into and out of a vehicle will enable easy replacement of the battery. The idea of the invention is more particularly based on enabling rapid replacement of an empty battery with a charged battery, wherein so-called battery replacement systems (see below) must be implemented along roads, where a battery can be replaced quickly."Quickly" must be understood to mean typically at least as quickly as filling a conventional car with fuel, and this preferably without the driver having to leave his vehicle.

A guide means of the at least one guide means also functions as electrode of the battery. A first and a second guide means can for instance thus be provided which form respectively the anode and the cathode.

The at least one guide means is arranged on the lower wall of the housing.
According to a preferred embodiment, the at least one guide means comprises at least one guide channel which is provided in the housing and is intended for co-action with a complementary guide rail in the vehicle. Still more preferably two guide channels are provided as described hereinbelow with reference to the figures.

Further advantageous measures which can be combined in random manner are:
- an identification means such as an RFID, a barcode or the like provided on the housing of the battery.
- a positioning means such as an iris for aligning the battery relative to the loading means for placing/removing a battery in/out of a vehicle;
- a housing with a front wall intended to be accessible from the rear side of the car, which front wall is provided with at least one handle means, the handle means being adapted to be grasped in order to remove the battery from or place it in the vehicle. The at least one handle means comprises for instance two handle openings in the front wall of the battery.
- a housing with a front wall, a rear wall and two side walls, wherein each side wall is provided with a locking opening for locking the battery after placing in the vehicle;
- a housing with a rear wall in which a safety circuit element is provided which is adapted to interrupt the power supply to the clamps of the battery when the battery is not in an operational position in the vehicle;
- a housing with two side walls, wherein one or more handles are provided on each side wall;
- a housing with an upper wall in which a heat discharge zone is provided.

The invention also relates to a vehicle incorporating a battery according to the invention. The at least one guide means of the battery supports here on at least one complementary guide in the vehicle specially provided for this purpose, such that the battery can slide easily into/out of the vehicle. According to a preferred embodiment, the at least one complementary guide comprises at least one guide rail, which at least one guide rail co-acts with the at least one guide channel in the battery.

According to yet another aspect, the invention relates to a method for replacing a rechargeable battery in an electric vehicle with another, charged battery, comprising of:
- providing a movable platform and allowing one vehicle at a time to drive thereon when the platform is in a first position;
- moving the platform to a second position;
- sliding the battery out of the vehicle using an automatic loading/unloading system;
- sliding the other, charged battery into the vehicle using the automatic loading/unloading system;
- allowing the vehicle to drive away from the platform in the second position.

The invention further relates to a system for replacing a rechargeable battery, according to claim 10.

According to a possible embodiment, the means for replacing the battery comprise a gripping mechanism for gripping the at least one handle means of the battery.

According to a possible embodiment, the system further comprises a number of batteries as according to an above described embodiment.

Finally, the invention relates to a battery charging station for charging rechargeable batteries of the above described type, comprising a number of carrying structures for individual batteries. Each carrying structure preferably comprises at least one support guide intended to support a battery and to co-act with the guide means thereof. The at least one support guide is preferably adapted to transfer energy to the battery. In this way a support guide thus functions simultaneously as carrying element for the battery and as electrical contact for the electrode of the battery.
According to a preferred embodiment of the battery charging station, the at least one support guide consists of two girders which fit into two complementary guide channels of the battery, wherein the guide channels form the electrodes of the battery and the girders are adapted to transfer energy to these electrodes.

According to another aspect, the invention relates to the use of an embodiment of a battery as described above in a vehicle.

The assembly comprises two guides complementary to the guide means and intended to support the battery such that the battery can be slid with the lower wall downward in/out of the vehicle.

The invention will be further elucidated on the basis of a number of exemplary embodiments, which are by no means limitative, of the device and method according to the invention, with reference to the accompanying drawings, in which:
Figure 1 is a schematic rear view of an embodiment of a car with a rechargeable and replaceable battery according to the invention;
Figure 2 is a schematic perspective view of an embodiment of the rechargeable and replaceable battery according to the invention;
Figures 3 and 5 illustrate schematically an embodiment of a battery according to the invention,
wherein the battery is positioned on guide rails provided in a vehicle;
Figure 4 illustrates a schematic perspective view of a further developed embodiment of a rechargeable and replaceable battery according to the invention, as seen from the front;
Figure 4A shows a schematic perspective view of the battery of figure 4 as seen from the rear;
Figures 6A and 6B illustrate respectively a schematic perspective view and a cross-section of the locking means in an embodiment of a battery according to the invention;
Figure 7 is a schematic perspective view of an embodiment of a battery according to the invention being removed from a vehicle using an automatic arm;
Figures 8A-F illustrate schematically an embodiment of the method according to the invention; and
Figure 9 is a schematic perspective view of an embodiment of a battery charging station according to the invention.

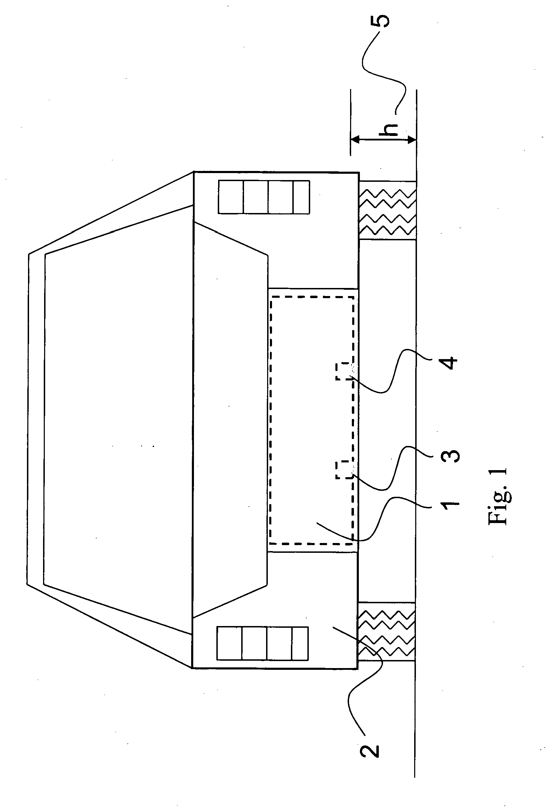

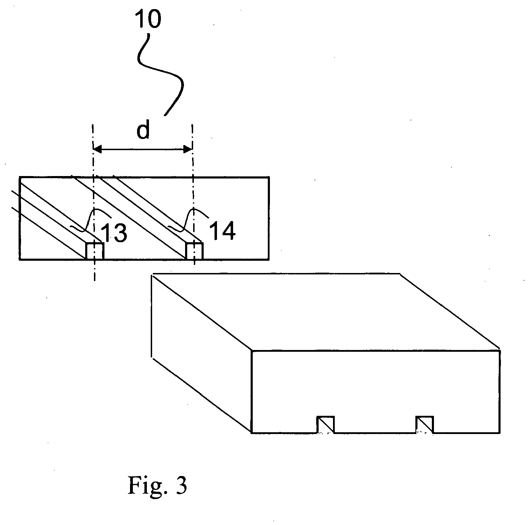

Figure 1 illustrates schematically the rear side of a car, wherein it can be seen that a battery 1 can be positioned along the rear side 2 in the car and can be removed from the car. The battery has an underside 21, an upper side 23, a front side 24, a rear side 22 and sides 20. Battery 1 is provided on its underside 21 with two guide channels 3, 4 in which guide rails 13, 14 can be received, see figure 3. These guide channels 3, 4 and guide rails 13, 14 allow simple positioning of the battery, and therefore easy replacement of the battery. According to a preferred embodiment, guide channels 3, 4 also serve as electrodes, wherein guide channel 3 serves for instance as anode and the other guide channel 4 serves as cathode. In this way the guide channels and guide rails have a dual function, i.e. a positioning function and an electrical connecting function.

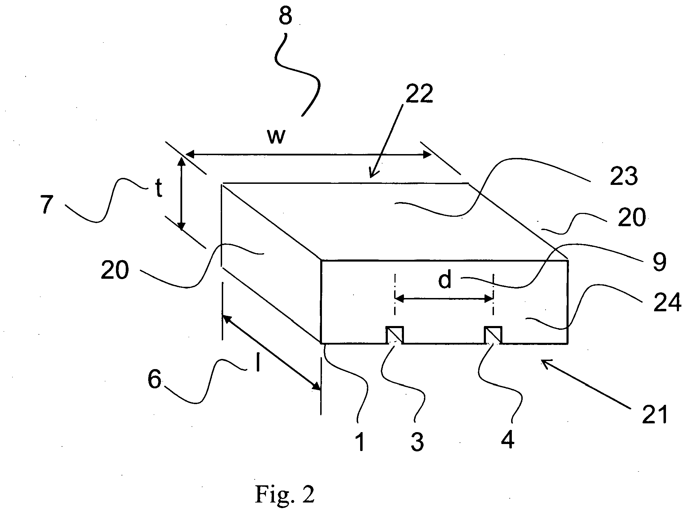

In order to make application of the present invention worthwhile and successful it can be advantageous to standardize the dimensions of the battery as far as possible. Figure 2 shows the most important dimensions for a substantially beam-shaped battery: the length 1 (reference numeral 6) of the battery, the thickness t (reference numeral 7) of the battery, the width w (reference numeral 8) of the battery and the distance d between the guide rails (reference numeral 9). It is a further advantage to also select a standardized height h (reference numeral 5), being the distance between underside 21 of the battery and the ground level. For a passenger car the dimensions are in advantageous manner preferably chosen as follows:
- height between 20 and 60 cm, for instance 30 cm;
- length between 40 and 80 cm, for instance 60 cm;
- thickness between 20 and 40 cm, for instance 30 cm;
- width between 60 cm and 120 cm, for instance 90 cm;
- distance between the guide rails between 30 and 90 cm, for instance 60 cm.

The skilled person will appreciate that the above stated dimensions are not intended as a limitation to the invention, and that it is possible to differ therefrom without departing from the scope of the invention. The skilled person will further appreciate that, as battery technology evolves and smaller batteries can be made, these dimensions must preferably be chosen as small as possible, while a sufficient amount of energy can still be stored. The skilled person will further appreciate that the battery does not have to be beam-shaped and that other shapes are also suitable and fall within the scope of the invention.

Guide rails 13 and 14 preferably have a profile which is complementary to the profile of guide channels 3, 4. Particularly when guide channels 3, 4 also serve as connectors, it is important that a good electrical contact is created between the electrically conductive material provided in guide channels 3, 4 and the electrically conductive material provided on or in guide rails 13, 14. Guide channels 3, 4 can further be equipped in their interior with respective brushes 33, 34 which are adapted to clean the respective guide rails 13, 14 during sliding of battery 1 into and out of the car.

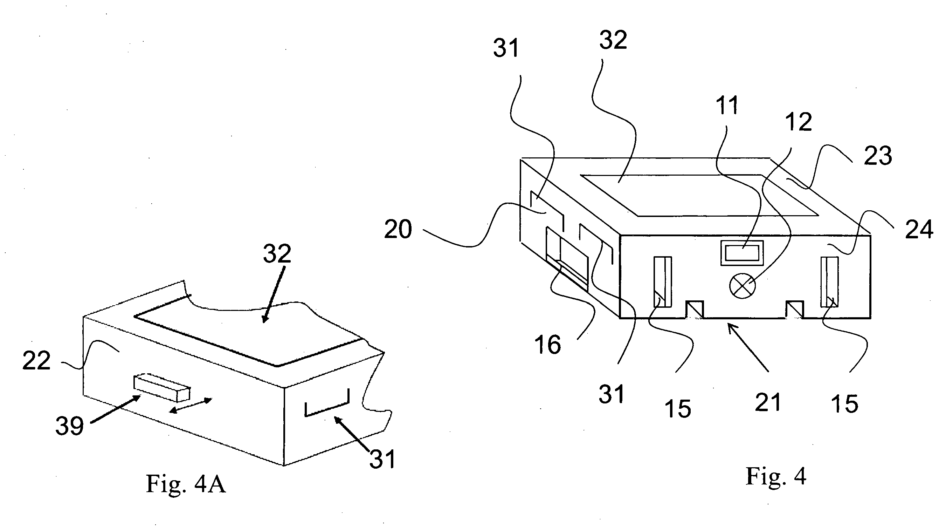

According to an advantageous embodiment, the battery according to the invention can be provided with a number of additional measures, as illustrated schematically in figure 4. An identification means 11 such as a bar code, an RFID or the like can thus be provided, preferably on front side 24 of the battery. Such an identification means will allow automatic identification of batteries and make it possible to manage a large number of such batteries. An identification means will also allow a large degree of automation of the charging process, as will become apparent hereinbelow.

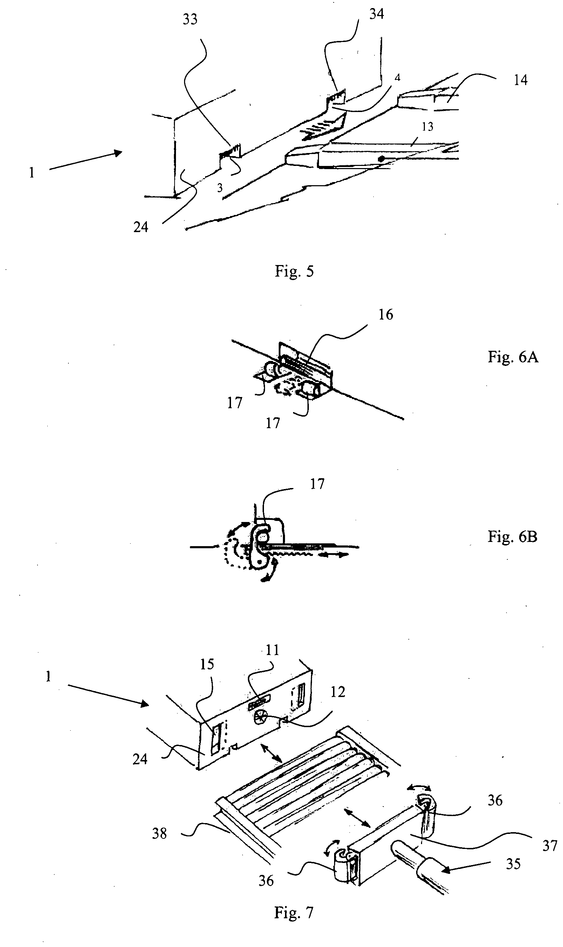

Another optional measure consists of providing an aligning means 12, such as an iris, whereby a very accurate positioning of the battery is made possible. A very precise alignment can in this way take place in automatic manner before sliding the battery over guide rails 13, 14. This is illustrated in figure 7, which shows that iris 12 can be used for precise alignment of the loading arm with gripping means relative to battery 1.

According to a further option, handle openings 15 can be arranged in front side 24 of the battery, see figures 4 and 7. A battery can in this way be removed from a car and placed in a car in simplified manner using a loading arm 35 with support block 37 and gripping means or jaws 36. The skilled person will appreciate that the above described form of gripping means or jaws is not intended as a limitation to the embodiment, and that other gripping mechanisms, which likewise allow the battery to be firmly secured and removed from the car or placed in the car, also lie within the field of application of this invention. According to a possible embodiment, a conveyor belt 38, such as a roller conveyor, is first placed against the rear side of the car, after which support block 37 is placed against front side 24 of the battery and the gripping means 36 engage in openings 15 in order to pull the battery out of the vehicle. A new battery can be placed in similar manner in a vehicle.

A number of securing openings 16 can further be provided to enable firm anchoring of the battery during travel. In the case of figures 4 and 6A and 6B, securing openings 16 are arranged in sides 20 of the battery. Locking means such as protrusions 17 can then be provided in vehicle 2 in order to anchor the battery firmly during travel. The skilled person will appreciate that control of locking means 17 can take place in different ways, and for instance electrically, pneumatically, mechanically and/or hydraulically.

According to a possible embodiment, a safety circuit element 39 can be provided on rear side 22 of the battery as illustrated schematically in figure 4A. Safety circuit element 39 is adapted to interrupt the power supply to the clamps of the battery when the battery is not in the operational position. As soon as the battery has been slid into the car and is in the operational position, a switch of the safety circuit element switches in order to enable power supply. In the shown embodiment the safety circuit element is provided with a press-in element, see the arrow at reference numeral 39 in figure 4A, although the skilled person will appreciate that other embodiments are possible. During placing of the battery in the operational position this press-in element is moved into the battery, whereby a switch (not shown) is closed and power supply is possible. Thus avoided at all times is that a user could receive an electric shock during removal of the battery.

Additional handgrips 31, here four additional handgrips 31, can further be provided on sides 20. The battery will hereby also be easily removable manually by for instance two persons. Note that the battery does not typically have to be removed manually, and that these handgrips are intended rather as precautionary measure.

Finally, according to an optional measure, a heat transfer zone 32 can be provided on upper side 23 of the battery of a material with a greater heat transfer coefficient than that of the rest of the housing. The heat which develops in the battery can in this way be discharged without problem. An additional heat pump can further be provided for this purpose. According to yet another variant, fans can be built into the battery.

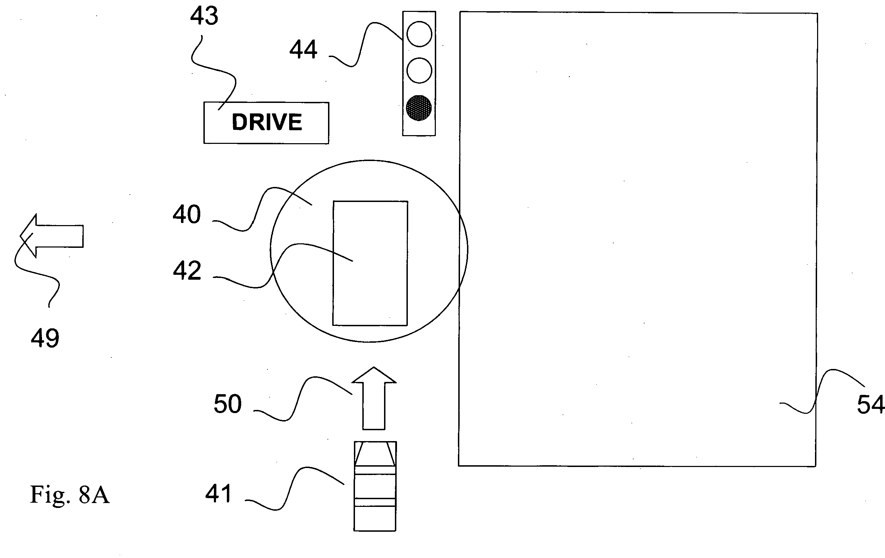

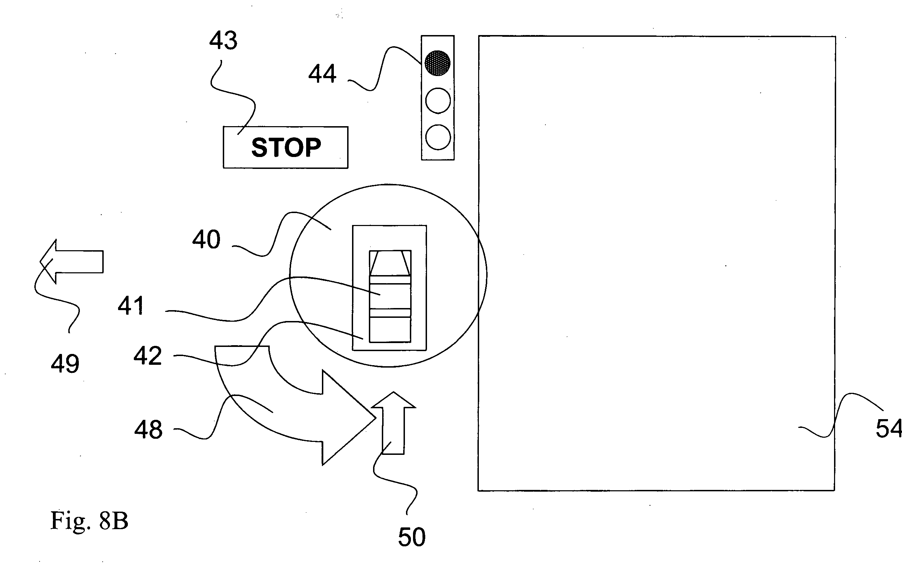

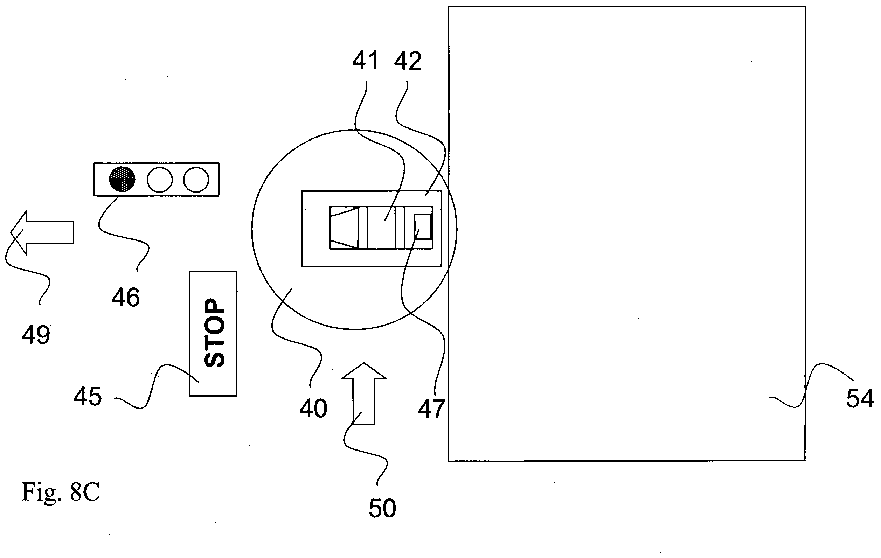

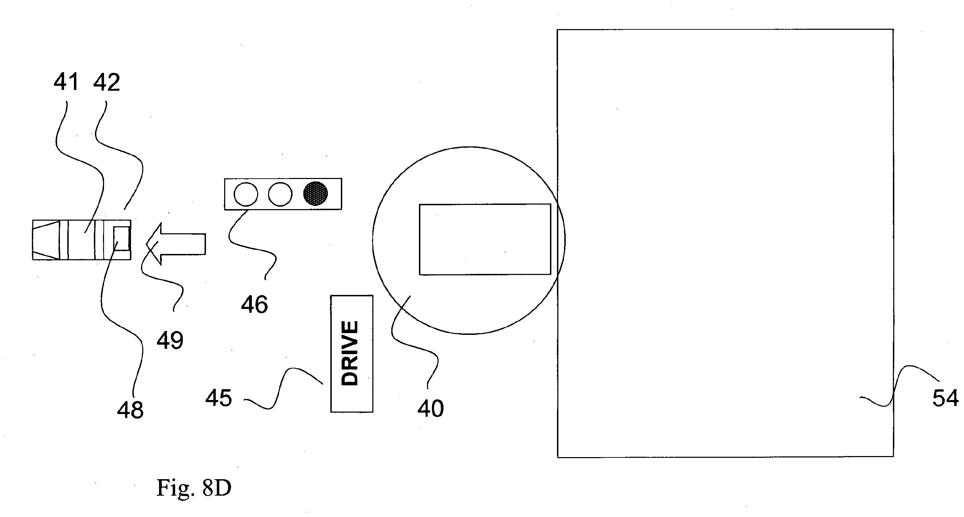

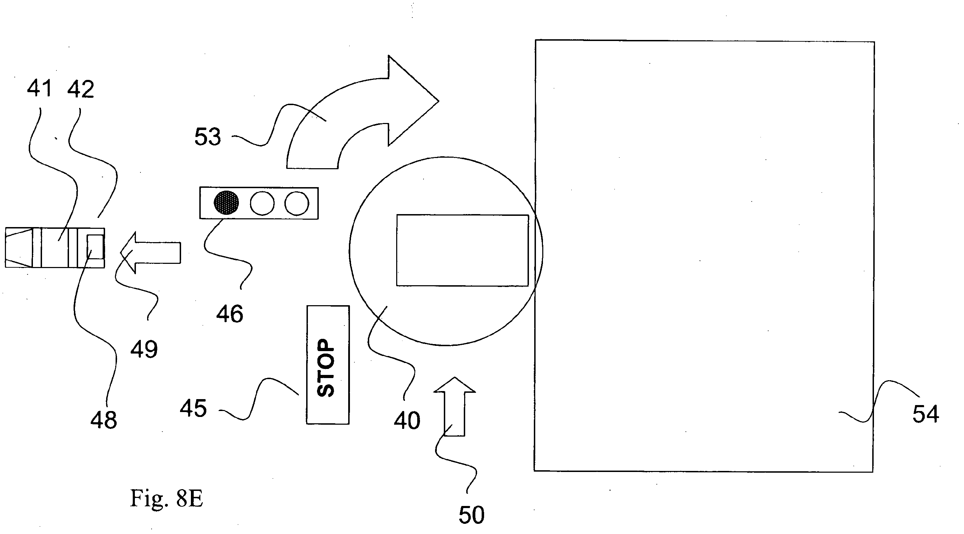

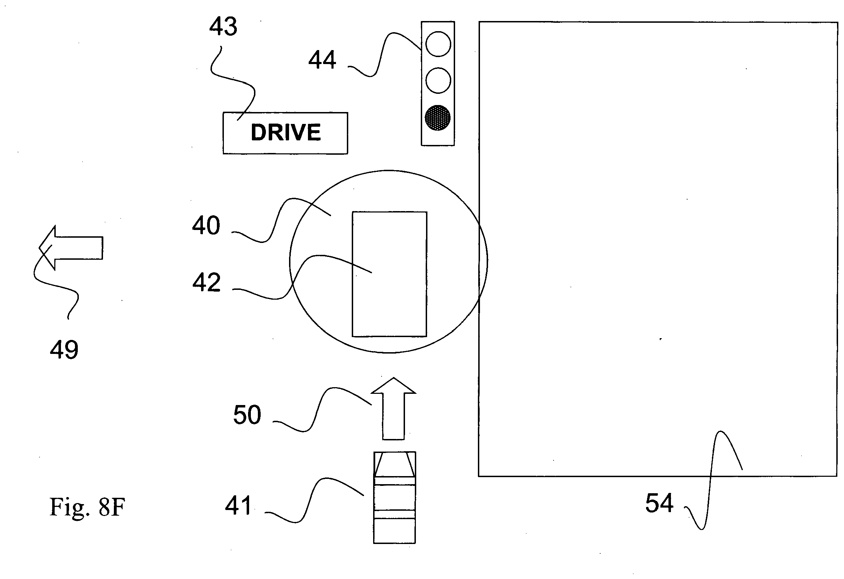

An embodiment of the method and the system according to the invention will now be described with reference to figures 8A-F. Figures 8A-F show schematically a replacing station in which the following successive steps are performed:
1. A vehicle 41 is invited to take up position on a rotary platform 40 by driving onto the platform in the direction of arrow 50. This is for instance achieved by showing the text "DRIVE" on a first signalling panel 43 and by setting a first traffic light 44 to green, see figure 8A. This can of course also take place in other ways.
2. Once a vehicle 41 has been driven onto a strip 42 of platform 40 provided for this purpose and has reached a determined position - in which position replacing of the battery is made possible - traffic light 44 turns to red and "STOP" appears on signalling panel 43. The rotary platform is rotated a quarter-turn, see arrow 48 in figure 8B, such that car 41 comes to stand with its rear side opposite a charging station 54, see figure 8C. The skilled person will appreciate that the angle of rotation of the platform can also differ from 90 degrees, and could for instance also be 60 or 120 degrees.
3. The battery can now be replaced, for instance as illustrated in figure 7 and shown schematically with reference numeral 47 for the empty battery and reference numeral 48 for the charged battery in figures 8C and 8D.
4. Following successful replacement of the battery the driver is given an indication that he/she may drive off platform 40 in a second direction 49. This can for instance be realized by displaying the text "DRIVE" on a second signalling panel 45 and setting a second traffic light 46 to green.
5. Rotary platform 40 is then again rotated a quarter-turn, see figure 8E, but this time in the other direction of rotation as according to arrow 53 so that it returns once again to its original position, see figure 8F, and a subsequent car can be serviced.

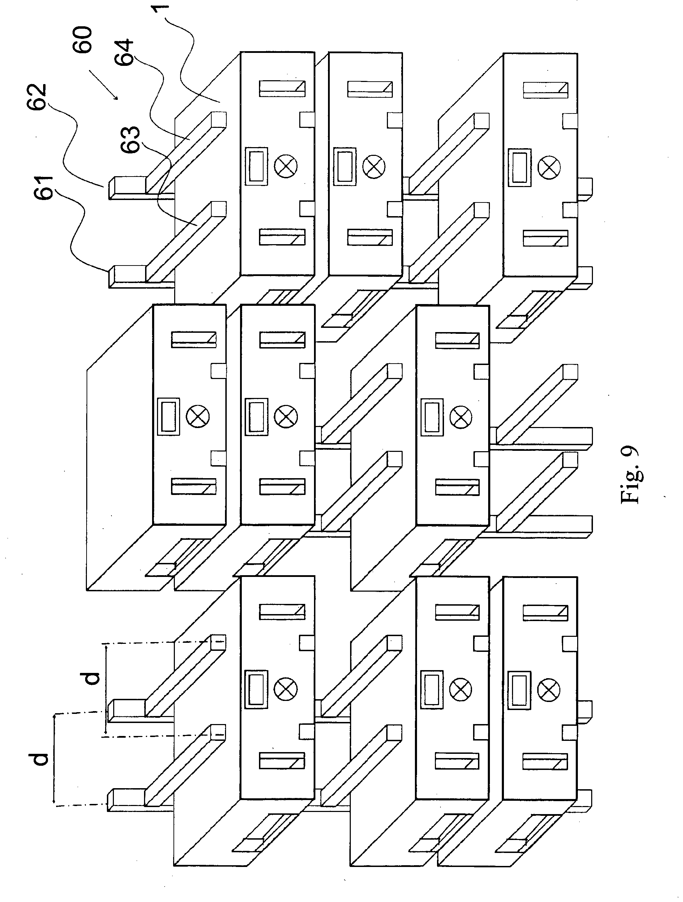

Figure 9 illustrates an embodiment of the interior space of a charging station 54 according to the invention, where the batteries are stacked (by a robotized mechanism) in racks 60. In the shown embodiment each rack comprises two vertical uprights 61, 62 and a number of horizontal girders 63 and 64. Girders 63, 64 are constructed such that they also function as electrodes (anode and cathode) and can thus charge the batteries.

A battery 47 which is removed from a vehicle is transferred from loading platform 40 to charging station 54 and, once recharged, included in the group of batteries which can be introduced into a subsequent vehicle on loading platform 40. At different locations in the system read means for the identification means of a battery can further be provided, thereby enabling proper management of the batteries in the charging station.

Charging station 54 will typically be provided on the outside with loading docks, from which an empty battery is taken out of a vehicle and a charged battery is placed in a vehicle. The roof of the charging station can further be provided with solar panels and/or wind turbines can be provided in the vicinity of the charging station. The transfer of energy from an energy supplier to the charging station preferably takes place under high voltage in order to limit energy losses to a minimum.

The skilled person will appreciate that the present invention is not limited to the above described exemplary embodiments, and that many modifications can be envisaged without departing from the scope of the invention, this scope being defined solely by the appended claims.

The skilled person will further appreciate that it is also possible to work with guide channels in the vehicle and protruding ribs on the battery, or with other guide constructions.

## Claims

1. An assembly for use in a vehicle comprising:
- a rechargeable battery (1) for use in a vehicle, comprising:
- a housing;
- at least one guide means (3, 4) connected to the housing or integrated into the housing wherein the at least one guide means comprises a first and a second guide means (3, 4), wherein the battery is a beam-shaped battery, wherein the housing has a front wall, a rear wall and two side walls, and wherein the first and the second guide means are located in between the side walls, wherein the first guide means (3) forms a first electrode of the battery and the second guide means (4) forms a second electrode of the battery; wherein, in the mounted position of the battery in the vehicle the housing has an upper wall (23) and a lower wall (21), **characterized in that** the at least one guide means (3, 4) is arranged on the lower wall (21) of the housing; and **in that** the assembly comprises:
- a first and second complementary guides (13, 14) complementary to the first and second guide means and supporting the battery, such that the battery can slide with the lower wall downward, into/out of the vehicle; wherein the first and second guide means of the battery supports on the first and second complementary guide.

2. Assembly as claimed in claim 1, **characterized in that** the first and second guide means comprises a first and second guide channel, which first and second guide channel is provided in the housing and is intended for co-action with the complementary first and second guide.

3. Assembly according to claim 2, **characterized in that** the first and second complementary guide (13, 14) comprises a first and second guide rail for co-acting with the first and second guide channel in the battery.

4. Assembly as claimed in any of the foregoing claims, **characterized in that** the battery (1) is provided with an identification means (11) such as an RFID; and/or
**in that** the battery (1) is provided with a positioning means (12).

5. Assembly as claimed in any of the foregoing claims, **characterized in that** the housing has a front wall (24) and a rear wall (22), wherein the front wall is intended to be accessible from the rear side of the car, which front wall is provided with at least one handle means, the handle means being adapted to be grasped in order to remove the battery from or place it in the vehicle.

6. Assembly as claimed in claim 5, **characterized in that** the at least one handle means comprises two handle openings (15).

7. Assembly as claimed in any of the foregoing claims, **characterized in that** the housing has a front wall (24), a rear wall (22) and two side walls (20), and that each side wall is provided with a locking opening (17) for locking the battery after placing in the vehicle.

8. Vehicle comprising an assembly as claimed in any of the foregoing claims.

9. Method for replacing a rechargeable battery from a vehicle according to claim 8 with another, charged battery, comprising of:
- providing a movable platform and allowing one vehicle at a time to drive thereon when the platform is in a first position;
- moving the platform to a second position;
- sliding the battery out of the vehicle using an automatic loading/unloading system;
- sliding the other, charged battery into the vehicle using an automatic loading/unloading system;
- allowing the vehicle to drive away from the platform.

10. System for replacing a rechargeable battery from a vehicle according to claim 8, comprising:
- a movable platform adapted for driving on and off of a vehicle;
- a battery storage space for storing and charging empty batteries according to any one of the claims 1-7; said battery storage space comprising a number of carrying structures for individual batteries; wherein each carrying structure comprises a first and a second support guide (63, 64) intended to support the battery and to co-act with the first and second guide means thereof; wherein the first and second support guide (63, 64) are constructed such that they also function as electrodes and can thus charge the batteries;
- gripping means adapted for gripping and replacing a battery of a vehicle according to claim 8 placed on the movable platform.

11. System as claimed in claim 10 for replacing a battery according to claim 5 or 6, **characterized in that** the gripping means comprise a gripping mechanism for gripping at least one handle means (15) of the battery.

12. System as claimed in claim 10 or 11, **characterized in that** the movable platform is a rotary platform.

13. Use of a rechargeable battery in an assembly according to any one of the claims 1-7, comprising:
- a housing;
- at least one guide means connected to the housing or integrated into the housing and intended for co-action with at least one complementary guide in the vehicle, this such that the battery can be slid into the vehicle; wherein the at least one guide means comprises a first and a second guide means, wherein the first guide means forms a first electrode of the battery and the second guide means forms a second electrode of the battery; wherein the housing has an upper wall and a lower wall, and the at least one guide means is arranged on the lower wall of the housing.

## Patentansprüche

1. Aufbau zur Verwendung in einem Fahrzeug, umfassend:
- eine aufladbare Batterie (1) zur Verwendung in einem Fahrzeug, umfassend:
- ein Gehäuse;
- zumindest ein Führungsmittel (3, 4), welches mit dem Gehäuse verbunden ist oder darin integriert ist, wobei das zumindest eine Führungsmittel ein erstes und ein zweites Führungsmittel (3, 4) umfasst, wobei die Batterie eine strahlenförmige Batterie ist, wobei das Gehäuse eine Frontwand, eine Rückwand und zwei Seitenwände aufweist, und wobei das erste und das zweite Führungsmittel zwischen den Seitenwänden angeordnet ist, wobei das erste Führungsmittel (3) eine erste Elektrode von der Batterie bildet, und wobei das zweite Führungsmittel (4) eine zweite Elektrode von der Batterie bildet; wobei, in der montierten Position der Batterie in dem Fahrzeug, das Gehäuse eine obere Wand (23) und eine untere Wand (21) aufweist, **dadurch gekennzeichnet, dass** das zumindest eine Führungsmittel (3, 4) auf der unteren Wand (21) von dem Gehäuse angeordnet ist; und **dadurch, dass** der Aufbau umfasst:
- eine erste und eine zweite komplementäre Führung (13, 14), welche komplementär zu dem ersten und dem zweiten Führungsmittel sind, und welche die Batterie tragen, so dass die Batterie mit der unteren Wand nach unten gerichtet in/aus das/dem Fahrzeug hinein/heraus gleiten kann; wobei das erste und das zweite Führungsmittel von der Batterie auf der ersten und der zweiten komplementären Führung gelagert sind.

2. Aufbau gemäß Anspruch 1, **dadurch gekennzeichnet, dass** das erste und das zweite Führungsmittel einen ersten und einen zweiten Führungskanal umfassen, wobei der erste und der zweite Führungskanal in dem Gehäuse vorgesehen sind, und dazu gedacht sind, um mit der komplementären ersten und zweiten Führung zusammenzuwirken.

3. Aufbau gemäß Anspruch 2, **dadurch gekennzeichnet, dass** die erste und die zweite komplementäre Führung (13, 14) eine erste und eine zweite Führungsschiene umfassen, um mit dem ersten und dem zweite Führungskanal in der Batterie zusammenzuwirken.

4. Aufbau gemäß irgendeinem der vorhergehenden Ansprüche, **dadurch gekennzeichnet, dass** die Batterie (1) mit einem Identifikationsmittel (11), wie beispielsweise einem RFID, versehen ist; und/oder **dadurch, dass** die Batterie (1) mit einem Positioniermittel (12) versehen ist.

5. Aufbau gemäß irgendeinem der vorhergehenden Ansprüche, **dadurch gekennzeichnet, dass** das Gehäuse eine Frontwand (24) und eine Rückwand (22) aufweist, wobei die Frontwand dazu gedacht ist, von der Rückseite des Autos zugänglich zu sein, wobei Frontwand mit zumindest einer Griffeinrichtung versehen ist, wobei die Griffeinrichtung angepasst ist, um gegriffen zu werden, um die Batterie von dem Fahrzeug zu entfernen oder darin zu platzieren.

6. Aufbau gemäß Anspruch 5, **dadurch gekennzeichnet, dass** die zumindest eine Griffeinrichtung zwei Grifföffnungen (15) umfasst.

7. Aufbau gemäß irgendeinem der vorhergehenden Ansprüche, **dadurch gekennzeichnet, dass** das Gehäuse eine Frontwand (24), eine Rückwand (42) und zwei Seitenwände (20) aufweist, und dass jede Seitenwand mit einer Verriegelungsöffnung (17) zum Verriegeln der Batterie nach dem Platzieren in dem Fahrzeug versehen ist.

8. Fahrzeug, welches einen Aufbau gemäß irgendeinem der vorhergehenden Ansprüche umfasst.

9. Verfahren zum Ersetzen einer aufladbaren Batterie aus einem Fahrzeug gemäß Anspruch 8 durch eine andere geladene Batterie, umfassend:
- Vorsehen einer bewegbaren Plattform, um einem einzelnen Fahrzeug zu erlauben, darauf zu fahren, wenn die Plattform in einer ersten Position ist;
- Bewegen der Plattform zu einer zweiten Position;
- Herausgleiten lassen der Batterie aus dem Fahrzeug unter Verwendung eines automatischen Lade-/Entlade-Systems;
- Hereingleiten lassen der anderen geladenen Batterie in das Fahrzeug unter Verwendung eines automatischen Lade-/Entlade-Systems;
- dem Fahrzeug erlauben, von der Plattform wezufahren.

10. System zum Ersetzen einer aufladbaren Batterie aus einem Fahrzeug gemäß Anspruch 8, umfassend:
- eine bewegbare Plattform, welche angepasst ist, dass ein Fahrzeug darauf und davon weg fahren kann;
- einen Batterielagerraum zum Lagern und Laden von leeren Batterien gemäß irgendeinem der Ansprüche 1 - 7, wobei der Batterielagerraum eine Anzahl von tragenden Strukturen für einzelne Batterien umfasst; wobei jede tragende Struktur eine erste und eine zweite Trägerführung (63, 64) umfasst, welche dazu gedacht ist, die Batterie zu tragen und mit der ersten und der zweiten Führungseinrichtung davon zusammenzuwirken; wobei die erste und zweite Trägerführung (63, 64) konstruiert sind, so dass sie auch als Elektroden funktionieren und somit die Batterien laden können;
- Greifmittel, welche angepasst sind, um eine Batterie von einem Fahrzeug gemäß Anspruch 8, welches auf der bewegbaren Plattform platziert ist, zu greifen und zu ersetzen.

11. System gemäß Anspruch 10 zum Ersetzen einer Batterie gemäß Anspruch 5 oder 6, **dadurch gekennzeichnet, dass** das Greifmittel einen Greifmechanismus zum Greifen von zumindest einer Greifeinrichtung (15) von der Batterie umfasst.

12. System gemäß Anspruch 10 oder 11, **dadurch gekennzeichnet, dass** die bewegbare Plattform eine Drehplattform ist.

13. Verwendung einer aufladbaren Batterie in einem Aufbau gemäß irgendeinem der Ansprüche 1 - 7, umfassend:
- ein Gehäuse
- zumindest ein Führungsmittel, welches mit dem Gehäuse verbunden ist oder darin integriert ist und dazu gedacht ist, mit zumindest einer komplementären Führung in dem Fahrzeug zusammenzuwirken, so dass die Batterie in das Fahrzeug hineingleiten kann; wobei das zumindest eine Führungsmittel eine erste Elektrode von der Batterie bildet, und wobei das zweite Führungsmittel eine zweite Elektrode von der Batterie bildet; wobei das Gehäuse eine obere Wand und eine untere Wand aufweist, und das zumindest eine Führungsmittel auf der unteren Wand von dem Gehäuse angeordnet ist.

## Revendications

1. Ensemble pour une utilisation dans un véhicule comprenant :
- une batterie rechargeable (1) pour une utilisation dans un véhicule, comprenant :
- un boîtier ;
- au moins un moyen de guidage (3, 4) raccordé au boîtier ou intégré dans le boîtier, dans lequel l' au moins un moyen de guidage comprend des premier et deuxième moyens de guidage (3, 4), dans lequel la batterie est une batterie de forme cylindrique, dans lequel le boîtier a une paroi avant, une paroi arrière et deux parois latérales, et dans lequel les premier et deuxième moyens de guidage sont situés entre les parois latérales, dans lequel le premier moyen de guidage (3) forme une première électrode de la batterie et le deuxième moyen de guidage (4) forme une deuxième électrode de la batterie ; dans lequel, dans la position montée de la batterie dans le véhicule, le boîtier a une paroi supérieure (23) et une paroi inférieure (21), **caractérisé en ce que** l'au moins un moyen de guidage (3, 4) est agencé sur la paroi inférieure (21) du boîtier ; et **en ce que** l'ensemble comprend :
- des premier et deuxième guides complémentaires (13, 14) complémentaires des premier et deuxième moyens de guidage et supportant la batterie, de sorte que la batterie peut coulisser par rapport à la paroi inférieure vers le bas, à l'intérieur/à l'extérieur du véhicule ; dans lequel les premier et deuxième moyens de guidage de la batterie sont supportés sur les premier et deuxième guides complémentaires.

2. Ensemble selon la revendication 1, **caractérisé en ce que** les premier et deuxième moyens de guidage comprennent des premier et deuxième canaux de guidage, lesquels premier et deuxième canaux de guidage sont prévus dans le boîtier et sont destinés à une action conjointe avec les premier et deuxième guides complémentaires.

3. Ensemble selon la revendication 2, **caractérisé en ce que** les premier et deuxième guides complémentaires (13, 14) comprennent des premier et deuxième rails de guidage pour une action conjointe avec les premier et deuxième canaux de guidage dans la batterie.

4. Ensemble selon l'une quelconque des revendications précédentes, **caractérisé en ce que** la batterie (1) est munie d'un moyen d'identification (11) tel qu'une RFID ; et/ou
**en ce que** la batterie (1) est munie d'un moyen de positionnement (12).

5. Ensemble selon l'une quelconque des revendications précédentes, **caractérisé en ce que** le boîtier a une paroi avant (24) et une paroi arrière (22), dans lequel la paroi avant est destinée à être accessible depuis le côté arrière de la voiture, laquelle paroi avant est munie d'au moins un moyen de poignée, le moyen de poignée étant adapté pour être saisi afin de retirer la batterie du véhicule ou de la placer dans celui-ci.

6. Ensemble selon la revendication 5, **caractérisé en ce que** l'au moins un moyen de poignée comprend deux ouvertures de poignée (15).

7. Ensemble selon l'une quelconque des revendications précédentes, **caractérisé en ce que** le boîtier a une paroi avant (24), une paroi arrière (22) et deux parois latérales (20), et **en ce que** chaque paroi latérale est munie d'une ouverture de verrouillage (17) pour verrouiller la batterie après son placement dans le véhicule.

8. Véhicule comprenant un ensemble selon l'une quelconque des revendications précédentes.

9. Procédé de remplacement d'une batterie rechargeable à partir d'un véhicule selon la revendication 8 par une autre batterie chargée, comprenant les étapes consistant à :
- fournir une plateforme mobile et laisser un véhicule à la fois se déplacer sur celle-ci lorsque la plateforme se trouve dans une première position ;
- déplacer la plateforme jusqu'à une deuxième position ;
- faire coulisser la batterie hors du véhicule à l'aide d'un système de chargement/déchargement automatique ;
- faire coulisser l'autre batterie chargée dans le véhicule à l'aide d'un système de chargement/déchargement automatique ;
- laisser le véhicule s'éloigner de la plateforme.

10. Système de remplacement d'une batterie rechargeable depuis un véhicule selon la revendication 8, comprenant :
- une plateforme mobile adaptée pour conduire un véhicule sur celle-ci et hors de celle-ci ;
- un espace de stockage de batterie pour stocker et charger des batteries vides selon l'une quelconque des revendications 1 à 7 ; ledit espace de stockage de batterie comprenant un certain nombre de structures porteuses pour des batteries individuelles ; dans lequel chaque structure porteuse comprend des premier et deuxième guides de support (63, 64) destinés à supporter la batterie et à agir de manière conjointe avec les premier et deuxième moyens de guidage de celle-ci ; dans lequel les premier et deuxième guides de support (63, 64) sont construits de sorte qu'ils fonctionnent également comme des électrodes et peuvent donc charger les batteries ;
- des moyens de préhension adaptés pour prendre et remplacer une batterie d'un véhicule selon la revendication 8 placé sur la plateforme mobile.

11. Système selon la revendication 10 de remplacement d'une batterie selon la revendication 5 ou 6, **caractérisé en ce que** les moyens de préhension comprennent un mécanisme de préhension pour prendre au moins un moyen de poignée (15) de la batterie.

12. Système selon la revendication 10 ou 11, **caractérisé en ce que** la plateforme mobile est une plateforme rotative.

13. Utilisation d'une batterie rechargeable dans un ensemble selon l'une quelconque des revendications 1 à 7, comprenant :
- un boîtier ;
- au moins un moyen de guidage raccordé au boîtier ou intégré dans le boîtier et destiné à une action conjointe avec un guide complémentaire dans le véhicule, ceci de sorte que la batterie peut coulisser dans le véhicule ; dans lequel l'au moins un moyen de guidage comprend des premier et deuxième moyens de guidage, dans lequel le premier moyen de guidage forme une première électrode de la batterie et le deuxième moyen de guidage forme une deuxième électrode de la batterie ; dans lequel le boîtier a une paroi supérieure et une paroi inférieure, et l'au moins un moyen de guidage est agencé sur la paroi inférieure du boîtier.
